(19) Europäisches Patentamt
European Patent Office
Office européen des brevets

(11) Veröffentlichungsnummer: **0 208 885**
**B1**

(12) **EUROPÄISCHE PATENTSCHRIFT**

(45) Veröffentlichungstag der Patentschrift: **11.04.90**

(51) Int. Cl.⁵: **G 01 C 7/06**

(21) Anmeldenummer: **86107261.9**

(22) Anmeldetag: **28.05.86**

(54) Verfahren zur Anzeige von Bezugspunkten in Raum mit einem Laser.

(30) Priorität: **31.05.85 DE 3519527**

(43) Veröffentlichungstag der Anmeldung:
**21.01.87 Patentblatt 87/04**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**CH-A- 522 204**
**DE-A-1 947 443**
**DE-B-1 278 116**
**GB-A-2 098 329**

(73) Patentinhaber: **Krumbholz, Wolfgang, Dipl.-Ing.**
**Engländerstrasse 33**
**D-8751 Heigenbrücken (DE)**

(72) Erfinder: **Krumbholz, Wolfgang, Dipl.-Ing.**
**Engländerstrasse 33**
**D-8751 Heigenbrücken (DE)**
Erfinder: **Springer, Willi**
**Hainbuchenstrasse 2**
**D-8070 Ingolstadt (DE)**

(74) Vertreter: **Haft, Berngruber, Czybulka**
**Postfach 14 02 46 Hans-Sachs-Strasse 5**
**D-8000 München 5 (DE)**

Courier Press, Leamington Spa, England.

**Beschreibung**

Die Erfindung betrifft ein Verfahren und eine Vorrichtung zur Anzeige von Bezugspunkten im Raum, vorzugsweise von Bezugspunkten eines Soll-Ausbruchprofiles an der Ortsbrust eines in einer gegebenen Soll- bzw. Vortriebsrichtung auszubrechenden Tunnels mit Hilfe eines Lasers.

Aus der US—A—4,367,021 ist es bekannt, auf der Ortsbrust eines auszubrechenden Tunnels die Positionen von Bohrlöchern mit Hilfe eines Laserstrahles anzugeben, wobei dieser Laserstrahl von einem am First des Tunnels aufgehängten Laser abgegeben wird. Der Laser sendet hierbei einen Referenzstrahl aus, der die Vortriebsrichtung für den Tunnel definiert. Aus diesem Referenzstrahl wird mit Hilfe eines halbdurchlässigen Spiegels ein Anteil ausgeblendet, wobei dieser zweite Laserstrahl, der sog. Meßstrahl, mit Hilfe eines zweiten Spiegels so ausgelenkt wird, daß die Position eines Bohrloches an der Ortsbrust dargestellt wird. Der Auslenkwinkel dieses Meßstrahles ist in Abhängigkeit der Entfernung zwischen dem Laser und der Ortsbrust in einem Computer gespeichert und wird in Steuersignale für Stellvorrichtungen für die Spiegel transformiert.

Diese bekannte Vorrichtung kann nur in geraden Tunnelabschnitten eingesetzt werden, da der Referenzstrahl mit der Vortriebsrichtung für den Tunnel zusammenfallen muß, wenn die Positionen der einzelnen Bohrlöcher einigermaßen exakt angegeben werden sollen. Da bei gekrümmten Tunnelabschnitten die Referenzrichtung nicht mehr mit der Vortriebsrichtung übereinstimmt, die Ortsbrust somit nicht mehr senkrecht zu der Referenzrichtung liegt, ergeben sich systembedingte Fehler, die für einen exakten Vortrieb nicht mehr akzeptabel sind. Außerdem muß nach jedem Abschlag der Ortsbrust der dort abgebildete Referenzpunkt in seiner Lage geodätisch bestimmt und der Laser ggfs. neu ausgerichtet werden. Da dieser Vorgang an einem Tag üblicherweise vier- bis sechsmal stattfindet, ist das angegebene Verfahren aufwendig und behindert einen zügigen Vortrieb.

Desweiteren müssen bei dieser bekannten Vorrichtung die für die Ablenkung des Meßstrahles verwendeten Spiegel sehr genau positioniert werden können, um akzeptale Fehlertoleranzen zu erreichen. Wenn man in einem geraden Tunnelabschnitt von einem Abstand von etwa 100 m zwischen Laser und Ortsbrust ausgeht und eine Genauigkeit der Anzeige eines Bohrloches im Zentimeter-Bereich verlangt, so müssen die Spiegel mit einer Genauigkeit von etwa 0,0014° positioniert werden. Eine solche genaue Positionierung ist jedoch mit bekannten Mitteln kaum möglich.

Aus der DE—B—12 78 116 ist ebenfalls eine Vorrichtung zum Anzeigen der Lage von Bohrlöchern beim Tunnelbau mit Hilfe von zwei Peilgeräten bekannt, die nach dem Prinzip des Vorwärtseinschneidens mit konstanter Basis und veränderlichen Winkeln arbeiten und nach dem Theodolit-Prinzip um zwei zueinander senkrecht stehende Drehachsen schwenkbar sind. Der Bezugspunkt wird dann durch den Schnittpunkt der beiden Peilstrahlen angegeben. Hierbei ist denkbar, die beiden Peilgeräte jeweils durch einen Laser zu ersetzen. Für eine korrekte Arbeitsweise muß das gesamte Gerät mit den Peilgeräten in einer Entfernung von etwa 5 bis 10 m vor der Ortsbrust so aufgestellt werden, daß eine horizontale Peilachse in der Tunnel-ängsachse liegt. Die beiden Peilgeräte werden in ihrem Schwenk- und Nickwinkel so eingestellt, daß der Schnittpunkt der beiden Peilstrahlen in einer vorgegebenen Höhe oberhalb der Tunnellängsachse liegt. Durch die Veränderung der Winkelstellung eines Trägers für die beiden Peilgeräte können längs eines Kreises um die Tunnellängsachse mehrere Markierungspunkte für Bohrlöcher angezeigt werden. Sollen die Bohrlöcher nicht auf einer Kreislinie liegen, so muß jedesmal neben der Winkellage des Trägers auch noch der Abstand der beiden Peilgeräte zueinander verändert werden.

Dieses Verfahren kann nur manuell ausgeführt werden, z.B. anhand von vorgegebenen Tabellen, nach deren Daten die einzelnen Einstellungen vorgenommen werden. Nach jeder Markierung von Bohrlöchern muß das Gerät abgebaut und anschließend nach erfolgtem Abschlag der Ortsbrust erneut aufgestellt und jusiert werden. Das Verfahren ist zeitaufwendig und behindert insbesondere wegen der geringen Entfernung zwischen dem Gerät und der Ortsbrust einen zügigen Vortrieb.

Aus der GB—A—20 98 329 ist ein Verfahren zum Vermessen von vorhandenen Tunnelprofilen bekannt, bei dem ein erster Laserstrahl und ein zweiter Laserstrahl von einem entfernt aufgestellten Laser auf die Tunnelwand gerichtet werden. Wenn der Tunnel korrekte Abmessungen aufweist, so fallen die beiden Lichtpunkte zusammen; ist dieses nicht der Fall, kann die Abweichung von einem Soll-Profil bestimmt werden. Die Vorgabe eines Soll-Wertes, wie dieses für den Vortrieb eines Tunnels notwendig ist, ist mit diesem Verfahren nicht möglich.

Ein ähnliches Verfahren ist aus der CH—A—522 204 bekannt. Hier wird ebenfalls die Wand eines Tunnels mit zwei Laserstrahlen abgetastet, die von entfernt aufgestellten Lasern erzeugt werden. Entsprechend der Abweichung der auf der Tunnelfläche erzeugten Lichtpunkte voneinander, kann auf die Abweichung von einem Soll-Profil geschlossen werden. Auch bei diesem Verfahren ist es nicht möglich, Soll-Werte vorzugeben, wie sie für den Vortrieb eines Tunnels notwendig sind.

Beim Tunnelbau sind Verfahren bekannt, bei denen mittels feststehender Laser mehrere Laserstrahlpunkte als Bezugspunkte auf die Ortsbrust projiziert werden, von denen aus das Sollprofil vermessen wird. Zur Überprüfung der Profilhaltigkeit werde die konventionellen vermessungstechnischen Verfahren verwendet.

Durch die wenigen durch die auf die Ortsbrust treffenden Laserstrahlen erzeugten Bezugspunkte ist nur an einigen Stellen des Profils ein Anhalt gegeben, von denen aus sich das Profil aufmessen läßt. Da die projizierten Laserpunkte zwangsläufig im Profil liegen, ist der tatsächliche Profilpunkt zunächst nicht zu sehen, sondern muß erst noch von den projizierten Laserpunkten abgeleitet werden, und zwar im gekrümmten Bereich sogar mit ständig wechselnden Abstrichmaßen. Der Vermessungsaufwand zum Einrichten der bekannten Laser ist ziemlich hoch und erfordert entsprechend gut ausgebildetes Personal. Das Einrichten der Laser und das spätere Bestimmen des tatsächlichen Profils ausgehend von den auf die Ortsbrust projizierten Laserstrahlbezugspunkten erhöht den Aufwand bei den Vortriebsarbeiten erheblich.

Weiterhin befinden sich die Laser zwangsläufig im Arbeits- und Gefahrenbereich des Vortriebs. Eine relativ geringe Profilhaltigkeit vor allem in Tunnels ohne Ausbaubögen ist die zwangsläufige Folge. Eine Überprüfung des Lichtraumprofils ist nicht möglich, wofür mit hohem Vermessungs- und Rechenaufwand und ebenfalls mit erhöhtem Arbeitsaufwand die konventonelle Vermessung mittels Tachymeter notwendig ist.

Ähnliche Probleme wie bei der Vortriebsvermessung und -kontrolle in Tunnels bestehen auch bei anderen Bauwerken, insbesondere Hohlraumbauten. Auch bei derartigen Bauten besteht das Problem der einfachen und schnellen Lagebestimmung von Bezugspunkten.

Der Erfindung liegt die Aufgabe zugrunde, ein Verfahren und eine Vorrichtung der in Rede stehenden Art zu schaffen, mit denen einfach und schnell und ohne zusätzliche Vermessungsarbeiten Bezugspunkte in Raum, insbesondere Bezugspunkte auf einer Ortsbrust eines Tunnels entsprechend eines Soll-Ausbruchprofiles bestimmt werden können.

Diese Aufgabe ist für ein Verfahren bzw. eine Vorrichtung gemäß der Erfindung durch die Ansprüche 1 bzw. 7 gelöst.

Demgemäß wird der Laser auf einem koordinatenmäßig bekannten Punkt aufgestellt und durch direktes Verdrehen z.B. mit Hilfe von Getriebemotoren durch Anpeilen eines Anschlußpunktes, dessen Koordinaten bekannt sind, im Raum orientiert. Ausgehend von dieser Referenzrichtung und den vorgegebenen Entfernungen zwischen dem Laser und den zu markierenden Bezugspunkten werden dann die Koordinaten dieser Bezugspunkte berechnet und durch entsprechendes Verschwenken des Lasers abgebildet. Diese Abbildung kann mit Hilfe eines Lasers z.B. direkt auf der Ortsbrust eines Tunnels oder durch den Schnitt zweier Laserstrahlen erfolgen.

Zur Vortreibsvermessung und Vortriebskontrolle in Tunnels oder anderen Hohlraumbauten wird der Laser an einer Stelle in oder vor dem Tunnel oder dgl. aufgestellt und durch direktes Verschwenken des Lasers der Laserstrahl schrittweise oder kontrinuierlich entlang des Soll-Ausbruchprofiles an der Ortsbrust zyklisch bewegt. Hierbei wird das Soll-Ausbruchprofil direkt auf der Ortsbrust durch einen wandernden Laserlichtpunkt sichtbar. Der ortsfest installierte Laser wird bevorzugt um eine horizontale und eine vertikale Achse mit Hilfe der Schwenkantriebe, z.B. Schrittantriebe mit entsprechenden Digital-Analog-Wandlern und Lagereglern verschwenkt. Die Verschwenkung wird mit Hilfe eines Computers und einer Steuereinrichtung gesteuert.

Das Soll-Ausbruchprofil wird durch eine hinreichende Anzahl von Punkten ersetzt, die linear miteinander verbunden werden, so daß ein Polygon entsteht. Ein Kreisprofil läßt sich dadurch beliebig genau annähern.

Der Standpunkt des Lasers kann beliebig gewählt werden, z.B. in der Firste, so daß die Vortriebsarbeiten nicht behindert werden. Dieser Punkt wird zunächst lage- und höhenmäßig bestimmt. Des weiteren ist ein lage- und höhenmäßig bekannter Anschlußpunkt zur erstmaligen Orientierung des Strahles notwendig. Ist der Laserstrahl einmal auf den Anschlußpunkt eingerichtet, so ist der horizontale und vertikale Verfahrwinkel zum ersten Sollprofilpunkt leicht zu bestimmten, ebenso zum nächsten, wobei dann zwischen den einzelnen Profilpunkten nur noch die Differenz der Winkel maßgebend ist. Diese Berechnung der Verfahrwinkel kann von einem Computer programmgesteuert ausgeführt werden, der auch zugleich über eine Ansteuerschaltung die entsprechenden Drehbewegungen der zwei Motoren veranlassen kann.

Die Entfernung zwischen Laserstandpunkt und Ortsbrust ist weitgehend beliebig. Nach oben hin ist sie begrenzt von der Genauigkeit des Lasergeräts und der Ansteuerung (max. 200 m). Die untere Grenze liegt etwa bei 20 bis 30 m, da der Laserstrahl im allgemeinen schräg auf die Ortsbrust trifft, und sich dann Unebenheiten in der Ortsbrust stärker auswirken als bei größerem Abstand. Es kann somit von nur einem Laserstandpunkt aus über einen längeren Zeitraum gearbeitet werden. Entsprechend dem Vortriebsfortschritt ist lediglich nur jeweils die Lage des Ortsbrust in den Computer einzugeben, damit die aktuellen Sollprofil-Koordinaten berechnet werden können.

Eine Beschränkung hinsichtlich der Geometrie des Profils oder der Lage der Hohlraumachse besteht ncht; das Verfahren kann also ohne weiteres auch in gekrümmten und geneigten Tunnels angewandt werden.

Der Standpunkt des Lasergeräts braucht nicht unbedingt bekannt zu sein, wenn drei bekannte Punkte anzielbar sind. Dann läßt sich durch Anfahren der drei Punkte (und damit durch das Messen der Horizontal- und Vertikaldifferenzwinkel) durch Rückwärtseinschneiden die Lage und Höhe des Laserstandpunktes bestimmen, was ebenfalls vom Computer automatisch berechnet wird.

Bei Anwendung des erfindungsgemäßen Verfahrens sind also bis auf die gelegentliche Bestimmung einiger Anschlußpunkte, bzw. des Standpunktes keine Vermessungsarbeiten und Berechnungen notwendig, so daß die Vortriebssteuerung und -kontrolle weitgehend von einfachem Personal ohne vermessungstechnische Vorkenntnisse ausgeführt werden kann. Eine Behinderung der Vortriebsarbeiten tritt praktisch nicht ein.

Dises Verfahren ermöglicht die Auffahrung eines sehr genauen Profils, soweit es durch die Geologie des anstehenden Gebirges und durch die Vortriebsweise möglich ist. Überprofil wird auf einem Minimum reduziert. Gleichzeitig wird eventuell auftretendes Unterprofil im Ausbau sofort sichtbar und kann somit gleich beseitigt werden. Ein zur Zeit übliches späteres Nachprofilieren des gesamten Hohlraumes wird dadurch überflüssig. Durch Vermeidung von Über- und Unterprofil wird eine erhebliche Material- und Zeiteinsparung erreicht.

Das Verfahren eignet sich auch zur Überprüfung von bestehenden Hohlräumen, da es Abweichungen vom Soll-Lichtraumprofil leicht sichtbar macht.

Nach einer anderen Ausgestaltung der Erfindung ist vorgesehen, daß die Laserstrahlen zweier an im Abstand voneinander befindlichen Stellen aufgestellter Laser, die mittels eines Anschlußpunktes im Raum orientiert sind, durch gesteuertes Verschwenken um zwei sich rechtwinkelig kreuzende Achsen in dem zu bestimmenden Bezugspunkt zum Schnitt gebracht werden. Durch die beiden Strahlen der beiden Lasergeräte, die in der beschriebenen Weise durch nur einen Computer gesteuert werden können, können beliebige Bezugspunkte in Raum dadurch sichtbar gemacht werden, daß die beiden Laserstrahlen in diesem Punkt zum Schnitte gebracht werden. Durch einfaches Eintippen der Koordinaten eines Punktes in den Computer des Steuergerätes können beliebige Punkte in der Natur sichtbar gemacht werden, und zwar ohne besondere Vermessungsarbeiten und auch von einem ungeschulten Personal. Die beiden Laserstrahlen steuern zur Bestimmung des Bezugspunktes diesen an und kreuzen sich in diesem. Dabei sollte durch entsprechende Anordnung der Laserstandpunkte vermieden werden, daß sich ausgezogene Schnittpunkte ergeben. Nach dieser Ausführungsform des erfindungsgemäßen Verfahrens ist es auch möglich, räumliche Kurven, beispielsweise Böschungen, Streckenachsen o. dgl. in der Natur sichtbar zu machen, indem man den Schnittpunkt wandern läßt.

In weiterer Ausgestaltung der Erfindung ist vorgesehen, daß zur Bestimmung der Koordinaten eines Raumpunktes die beiden Laserstrahlen in diesem Raumpunkt zum Schnitt gebracht werden. Nach dem entsprechenden Ausrichten der beiden Laserstrahlen auf den zu bestimmenden Punkt können sich dann mit Hilfe des Computers des Steuergeräts die Koordinaten ablesen lassen. Beispielsweise können die Koordinaten auf einem Computerbildschirm sichtbar gemacht werden.

Ausführungsbeispiele der Erfindung werden nachstehend anhand der Zeichnung näher erläutert. In dieser zeigen

Fig. 1 ein Tunnelsollprofil,
Fig. 2 die Lage der Tunnelachse,
Fig. 3 den Grundriß des zu bestimmenden Tunnels,
Fig. 4 einen Längsschnitt durch den Tunnel in der Tunnelachse,
Fig. 5 eine schematische Darstellung des um zwei sich kreuzende Achsen verschwenkbaren Lasers,
Fig. 6 zwei sich kreuzende Laserstrahlen zur Bestimmung eines Raumpunktes im Grundriß und
Fig. 7 die sich kreuzenden Strahlen nach Fig. 6 in Aufriß.

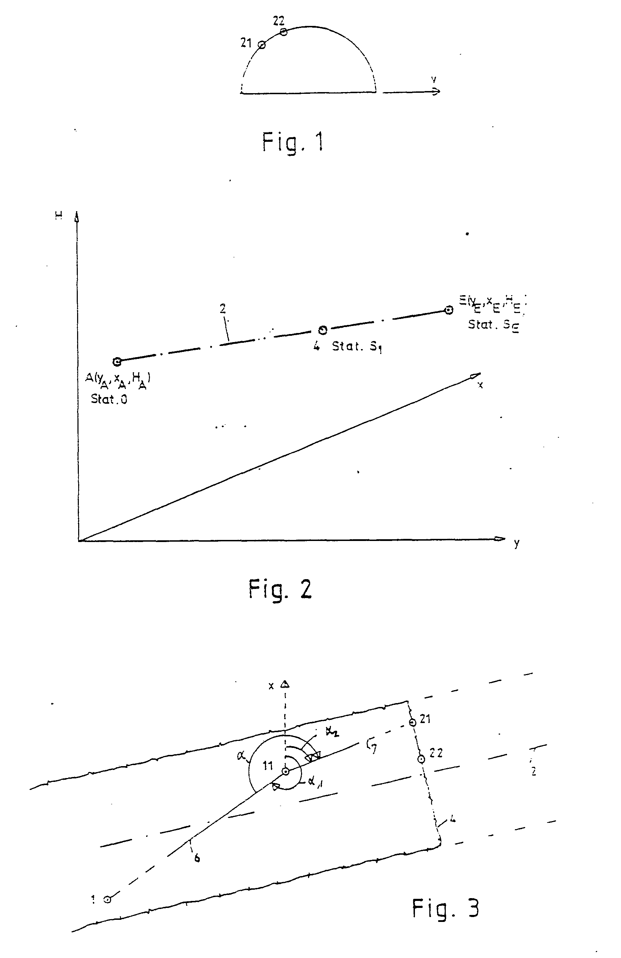

Anhand der Fig. 1 bis 4 wird nachstehend als einfaches Beispiel die Aufmessung eines horizontal verlaufenden, geraden Tunnels mit Halbkreisprofil erläutert.

Wie aus Fig. 1 ersichtlich ist, haben die Profilpunkte 21 und 22 in der dargestellten Ebene die lokalen Koordinaten $v21$, $u21$ und $v22$, $u22$.

Gemäß Fig. 2 ist die Tunnelachse 2 durch den Tunnelanfang in der Station 0 mit den Koordinaten $y_A$, $x_A$, $H_A$ und durch das Tunnelende in der Station SE mit den Koordinaten $y_E$, $x_E$, $H_E$ definiert. Die Tunnellänge entspricht somit der Länge der Tunnelachse 2 zwischen der Station 0 und der Station SE. Der Einfachheit halber wird nachstehend die Tunnellänge lediglich mit der Station bezeichnet.

Die Koordinaten eines beliebigen Achspunktes 4 der Station $S_1$ ergeben sich wie folgt:

$$y(S_1) = y_A + \frac{(y_E - y_A)}{S_E} \cdot S_1 \qquad \text{(Gl. 1)}$$

$$x(S_1) = x_A + \frac{(x_E - x_A)}{S_E} \cdot S_1 \qquad \text{(Gl. 2)}$$

$$H(S_1 = H_A = H_E \text{ (da horizontal)} \qquad \text{(Gl. 3)}$$

Daraus lassen sich die Koordinaten der Profilpunkte 21 und 22 berechnen:

$$y_{21} = y(S_1) + v_{21} \cdot \frac{x_E - x_A}{S_E} \qquad \text{(Gl. 4)}$$

$$x_{21} = x(S_1) - v_{21} \cdot \frac{y_E - y_A}{S_E} \qquad \text{(Gl. 5)}$$

4

$$H_{21} = H(S_1) + u_{21} \qquad \text{(Gl. 6)}$$

analog für Profilpunkt 22

Der Laserstandpunkt 11 hat die Koordinaten $y_{11}$, $x_{11}$, $H_{11}$.

Der Anschlußpunkt 1 hat Koordinaten $y_1$, $x_1$, $H_1$.

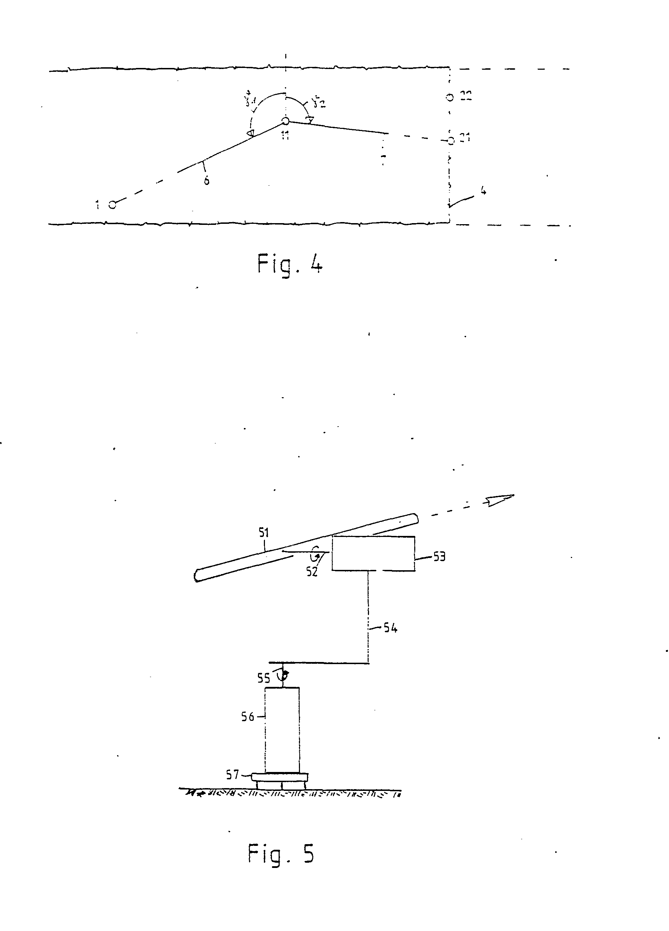

Damit lassen sich die Drehwinkel des Laserstrahls 6 und 7 bestimmen (Fig. 3 und 4):

Horizontalwinkel $\qquad \alpha = 400\ \text{gon} - \alpha_1 + \alpha_2 \qquad \text{(Gl. 7)}$

$$\alpha_1 = \text{arc tan} \frac{y_1 - y_{11}}{x_1 - x_{11}} \qquad \text{(Gl. 8)}$$

$$\alpha_2 = \text{arc tan} \frac{y_{21} - y_{11}}{x_{21} - x_{11}} \qquad \text{(Gl. 9)}$$

damit $\alpha$

Vertikalwinkel $\qquad \gamma = \gamma_1 - \gamma_2 \qquad \text{(Gl. 10)}$

$$\gamma_1 = \text{arc tan} \frac{H_{11} - H_1}{\sqrt{(y_{11} - y_1)^2 + (x_{11} - x_1)^2}} \qquad \text{(Gl. 11)}$$

$$\gamma_2 = \text{arc tan} \frac{H_{11} - H_{21}}{\sqrt{(y_{11} - y_{21})^2 + (x_{11} - x_{21})^2}} \qquad \text{(Gl. 12)}$$

damit $\gamma$

Analog werden die Winkel $\alpha$ und $\gamma$ für Profilpunkt 22 bestimmt.

Als erster Verfahrwinkel von Anschlußpunkt 1 aus zum Profilpunkt 21 sind die gesamten Winkel $\alpha$ und $\gamma$ maßgebend; alle weiteren Verfahrwinkel, also zwischen Punkt 21 und 22 und alle weiteren Profilpunkte, bestehen dann nur noch aus der Differenz der jeweiligen Winkel, also:

horizontaler Verfahrwinkel zwischen 21 und 22:

$$\alpha_{(21-22)} = \alpha_{(21)} - \alpha_{(22)} \qquad \text{(Gl. 13)}$$

analog für die Vertikalwinkel.     Diese einzelnen Winkel werden nun in Motorschritte umgerechnet.

Beispiel: 200-schrittiger Motor im Halbschrittbetrieb

Untersetzung $i = 100{:}1$

$\alpha_{(21-22)}$ sei 1,000 gon

$$\text{Motorschritten } N = 1{,}000\ \text{gon:} \quad \frac{400\ \text{gon}}{2 \cdot 200 \cdot 100}$$

$$N = 100\ \text{Schritte}$$

Der Computer gibt nun an die 2 Motoren die jeweilige errechnete Schrittzahl von und die jeweilige Schrittfrequenz (also Winkelgeschwindigkeit). Der Motor, der den größeren Winkel zu verfahren hat, fährt mit Maximalgeschwindigkeit, der 2. Motor entsprechend langsamer, sodaß beide für de Verfahrstrecke eine gleichlange Zeit benötigen; dadurch wird der Laserstrahlweg linear.

So werden alle Punkte des Profils nacheinander abgefahren und dieser Vorgang wird zyklisch wiederholt; der Anschlußpunkt wird dann nicht mehr benötigt.

Es ist auch möglich, den Strahl an bestimmten Punkten anzuhalten oder eine längere Zeit verharren zu lassen; dadurch können prägnante Profilpunkte optisch hervorgehoben werden.

Der Computer muß also die Tunnelachse (Gl. 1—3) und das Profil (lokale Koordinaten $v_{21}$, $u_{21}$ usw.) gespeichert haben, die für das gesamte Tunnel nur einmal erfaßt werden brauchen. Sodann benötigt er die Standpunktkoordinaten des Lasers ($y_{11}$, $x_{11}$, $H_{11}$), die Anschlußpunktkoordinaten ($y_1$, $x_1$, $H_1$) und die Station $S_1$ der Ortsbrust.

Die Berechnung der Verfahrwinkel (Gl. 1—13) und die Umsetzung in entsprechende Motorschritte läßt sich durch ein Programm realisieren.

Da der Laser für einen längeren Vortriebsabschnitt auf dem gleichen Standpukt belassen werden kann, braucht entsprechend des Vortriebsfortschritts nur jeweils die Station der Ortsbrust in der Computer neu eingegeben zu werden. Alle anderen Werte bleiben gleich.

Das erfindungsgemäße Verfahren arbeitet also weitgehend selbständig.

In Fig. 5 ist das Lasergerät zur Durchführung des Verfahrens schematisch dargestellt. Das Lasergerät besteht aus einem Laserrohr 51, das den Laserstrahl aussendet.

Dieses Rohr wird von einen Schrittmotor mit zwischengeschaltetem Untersetzungsgetriebe 53 um eine horizontale Achse 52 gedreht. Diese Kombination Laser und Getriebemotor ist, verbunden durch einen Winkel 54, wiederum drehbar um eine vertikale Achse 55 (ebenfalls aus Schrittmotor und Untersetzungsgetriebe 56 bestehend). Diese vertikale Achse 55 steht sekrecht unter dem Laser 51, so daß der Laserstrahl bzw. die gedachte Verlängerung bei beliebiger Verdrehung der beiden Achsen 52 und 55 immer durch einen Punkt geht (der Standpunkt des Lasers). Diese Vorrichtung bildet eine mobile Einheit und kann auf einem Dreifuß mit Grundplatte 57 durch einen Steckzapfen aufgesetzt werden.

Eine zweite Einheit, die mit dem Lasergerät nur durch die erforderlichen Stromkabel für Laser und Motoren verbunden ist, bildet der Computer und die Leistungsansteuerung für die Schrittmotoren. Diese Einheit ist auch transportabel. Dadurch kann auch über größere Entfernungen hinweg das Lasergerät angesteuert werden.

Die Stromversorgung wird entweder durch Batterien oder durch das Netz gewährleistet.

Die Auflösung, d.h. der kleinste Winkelschritt, den der Laserstrahl ausführen kann, hängt von der Schrittanzahl des Motors und vom Untersetzungsverhältnis des Getriebes ab. Ein 200-schrittiger Motor im Halbschrittbetrieb ergibt eine Auflösung von 0,9° = 54 Winkelminuten. Bei einem Untersetzungsverhältnis von i = 100:1 ergibt sich eine Endauflösung von 0,5 Winkelminuten. Bei entsprechender Genauigkeit der weiteren Mechanik ergibt sich in einer Entfernung von 100 m eine Schrittweite des Laserstrahlpunktes von 1,5 cm.

Die Schrittmotoren können auch durch Gleichstrommotoren ersetzt werrden unter Hinzunahme eines Digital-Analog-Wandlers und eines Lagereglers.

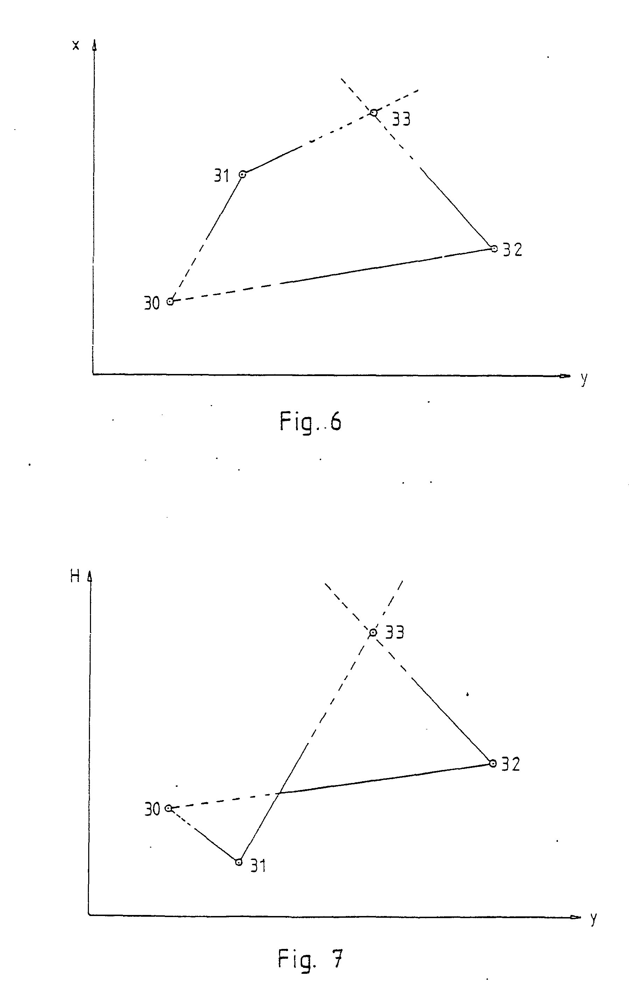

Aus den Fig. 6 und 7 ist das Verfahren zur Bestimmung eines beliebigen Raumpunktes ersichtlich. An den Stellen mit den Punkten 31 und 32 wird der Laser aufgestellt und beide Laser werden auf den Anschlußpunkt 30 ausgerichtet. Duch entsprechendes Verschwenken der Laserrohre läße sich im Raum der Bezugspunkt 33 bestimen. Umgekehrt lassen sich die Koordinaten eines Bezugspunktes 33 bestimmen, wenn die Strahlen der beiden Laser auf diesen ausgerichtet werden.

Soll beispielsweise ein Soll-Ausbruchprofil auf die Ortsbrust aufgezeichnet werden, kann es dadurch zu einer Verlagerung der von dem Laserstrahl projizierten Bezugpunkte kommen, daß die Ortsbrust nicht eben is. Da der die Licht- oder Bezugspunkte projizierende Laserstrahl überlicherweise winkelig auf die Ortsbrust auftrifft, wird der Bezugspunkt in Richtung des Laserstrahls verlagert, wenn eine Vertiefung vorliegt, und entgegen dieser Richtung, wenn eine Erhöhung vorliegt. Die Verlagerungen lassen sich aufgrund der bekannten Winkelbeziehungen aus der Abweichung der wirklichen Länge des Laserstrahls bis zu dem Auftreffpunkt zu der Solllänge des Laserstrahls errechnen.

Um fehlerhafte Projektionen der Bezugspunkte aufgrund unebener Flächen, auf die die Bezugpunkte zu projizieren sind, oder aufgrund einer unebenen Ortsbrust zu vermeiden, ist in weiterer Ausgestaltung der Erfindung vorgesehen, daß die Entfernung des Lasers zu dem von dem Laserstrahl erzeugten Bezugspunkt gemessen und der Schwenkwinkel des Laserstrahls entsprechend einer gemesenen Abweichung von der Solllänge des Laserstrahls derart korrigiert wird, daß der Bezugspunkt auf dem Sollprofil liegt. Die wirkliche Länge des Laserstrahls von dem Laser bis zu dem Bezugspunkt kann mit bekannten Geräten, beispielsweise optischen Meßgeräten, gemessen und ermittelt werden. Die gemessene Abweichung wird sodann in das Steuergerät des Lasers eingegeben. Durch ein entsprechendes Programm wird aus der gemessenen Abweichung von der Solllänge ein neuer Schwenkwinkel des Lasers errechnet und durch entsprechendes Verschwenken des Lasers die Lage des Bezugspunkts derart korrigiert, daß dieser auf dem Sollprofil, wenn auch in einer zu der Sollebene versetzten Ebene, liegt.

## Patentansprüche

1. Verfahren zur Anzeige von Bezugspunkten (21, 22) im Raum, vorzugsweise von Bezugspunkten eines Soll-Ausbruchprofils an der Ortsbrust (4) eines in einer gegebenen Soll- bzw. Vortriebsrichtung auszubrechenden Tunnels, mit Hilfe eines Lasers (51), der auf einem koordinatenmäßig bekannten Punkt (11, 31) aufgestellt ist und dessen Laserstrahl gesteuert so abgelenkt wird, daß die Bezugspunkte (21, 22) auf einer Oberfläche (4) im Raum angezeigt werden, dadurch gekennzeichnet, daß der Laser (51) zunächst auf einen Anschlußpunkt (1) gerichtet wird, dessen Koordinaten bekannt sind, daß dise Richtung als Referenzrichtung definiert wird, daß ausgehend von dieser Referenzrichtung die Koordinaten der Bezugspunkte (21, 22) in Abhängigkeit von deren Entfernung zum Laser (51) und der vorgegebenen Sollrichtung (2) berechnet werden und daß der Laser (51) zur Anzeige der Bezugspunkte (21, 22) anhand der errechneten Koordinaten direkt verschwenkt wird.

2. Verfahren nach Anspruch 1, dadurch gekennzeichnet, daß ein zweiter Laser, der an einer anderen koordinatenmäßig bekannten Stelle (32) aufgestellt ist, ebenfalls auf den Anschlußpunkt (30) gerichtet wird, daß die Koordinaten der Bezugspunkte (33) ebenfalls in Abhängigkeit von deren Entfernung vom Laser und einer vorgegebenen Sollrichtung (Tunnelachse 2) berechnet werden, daß der zweite Laser

6

anhand der errechneten Koordinaten direkt verschwenkt wird und daß die Laserstrahlen beider Laser in den Bezugspunkten (33) zum Schnitt gebracht werden.

3. Verfahren nach Anspruch 1 oder 2, dadurch gekennzeichnet, daß die Position des Lasers (11, 31, 32) durch Anzielen von drei in ihrer Lage bekannten Anschlußpunkten berechnet wird.

4. Verfahren nach einem der vorhergehenden Ansprüche, dadurch gekennzeichnet, daß jeder Laser (51, 31, 32) um zwei zueinander rechtwinklige Achsen verschwenk wird.

5. Verfahren nach einem der vorhergehenden Ansprüche, dadurch gekennzeichnet, daß zur Anzeige eines aus mehreren Bezugspunkten (21, 22) zusammengesetzten Profils der Laser (51, 31, 32) zyklisch verschwenkt wird.

6. Verfahren nach einem der vorhergehenden Ansprüche, dadurch gekennzeichnet, daß die Entfernung des Lasers (51, 31, 32) zu dem von dem Laserstrahl erzeugten Bezugspunkt (21, 22, 33) gemessen und der Schwenkwinkel des Laserstrahles entsprechend der gemessenen Abweichung von der Soll-Lage des Laserstrahles derart korrigiert wird, daß der Bezugspunkt auf einem Soll-Profil liegt.

7. Vorrichtung zur Durchführung des Verfahrens nach einem der vorhergehenden Ansprüche, dadurch gekennzeichnet, daß der Laser (51) rechtwinklig mit einer ersten Welle (52) verbunden ist, die in einem mit einem Schwenkantrieb für diese versehenen Gehäuse (53) schwenkbar gelagert ist, daß das Gehäuse (53) mit einer zweiten Welle (55) verbunden ist, die rechtwinklig zu der ersten Welle (52) verläuft und in einem mit einem Schwenkantrieb für diese versehenen Gestell (56, 57) drehbar gelagert ist, daß ein Computer mit einer Steuereinrichtung für die Schwenkantriebe vorgesehen ist, der die Koordinaten der Bezugspunkte (21, 22, 33) berechnet und anhand dieser Daten die Schwenkantriebe steuert.

8. Vorrichtung nach Anspruch 7, dadurch gekennzeichnet, daß sich die Achsen der Wellen (22, 55) auf der Mittellinie eines Laserrohres (51) schneiden.

9. Vorrichtung nach Anspruch 7 oder 8, dadurch gekennzeichnet, daß die Schwenkantriebe Getriebemotoren sind.

10. Vorrichtung nach Anspruch 9, dadurch gekennzeichnet, daß die Getriebemotoren Schrittmotoren sind.

11. Vorrichtung nach einem der Ansprüche 7 bis 10, dadurch gekennzeichnet, daß die Schwenkantriebe mit Digital-Analog-Wandlern und Lagereglern versehen sind.

## Revendications

1. Procédé d'affichage de points de repères (21, 22) dans l'espace, de préférence de points de repère d'un profil théorique de section totale sur le front de taille (4) d'un tunnel à percer dans une directon théorique ou d'avancement donnée, à l'aide d'un laser (51) qui est installé sur un point aux coordonnées connues (11, 31) et dont la rayon laser est dirigé par commande de telle sorte que les repères (21, 22) sont affichés sur une surface (4) dans l'espace, caractérisé en ce que le laser (51) est tout d'abord dirigé sur un point de connection (1) dont les coordonnées sont connues, que cette direction est définie comme direction de référence, qu'en partant de cette direction de référence, les coordonnées des points de référence (21, 22) sont calculées en fonction de leur distance du laser (51) et de la direction théorique donnée (2) et que le laser (51) est directement pivoté à l'appui des coordonnées calculées, pour afficher les points de repères (21, 22).

2. Procédé selon la revendication 1, caractérisé en ce qu'un second laser qui est installé à un autre emplacement (32) aux coordonnées connues, est également dirigé sur le point de connection (30), que les coordonnées des points de repère (33) sont également calculées en fonction de leur distance du laser et d'une direction théorique donnée (axe du tunnel 2), que le second laser est directement pivoté à l'appui des coordonnées calculées et que les rayons de laser des deux lasers biennent se couper aux points de repère (33).

3. Procédé selon la revendication 1 ou 2, caractérisé en ce que la position du laser (11, 31, 32) est calculée en visant trois points de connection dont la position est connue.

4. Procédé selon l'une des revendications précédentes, caractérisé en ce que chaque laser (51, 31, 32) est pivoté sur deux axes à angles droits l'un par rapport à l'autre.

5. Procédé selon l'une des revendications précédentes, caractérisé en ce que pour afficher un profil constitué par plusieurs points de repère (21, 22), le laser (51, 31, 32) est soumis à un pivotement cyclique.

6. Procédé selon l'une des revendications précédentes, caractérisé en ce que la distance entre le laser (51, 31, 32) et le point de repère (21, 22, 33) produit par le rayon du laser est mesurée et l'angle de pivotement est corrigé de la position théorique du rayon laser en fonction de l'écart mesuré, de telle sorte que le point de référence est situé sur un profil théorique.

7. Dispositif pour réaliser le procédé selon l'une des revendications précédentes, caractérisé en ce que le laser (51) est relié à angle droit avec un premier arbre (52) qui pivote dans un boîtier (53) muni pour celui-ci d'un servo-moteur à fraction de tour, que le boîtier (53) est relié avec un second arbre (55) qui est à angle droit par rapport au premier arbre et pivotement dans un châssis (56, 57) muni pour celui-ci d'un servo-moteur à fraction de tour, qu'un ordinateur à organe de commande est prévu pour les servo-moteurs, ledit ordinateur calculant les coordonnées des points de repère (21, 22, 33) et commandant les servo-moteurs en fonction de ces données.

# EP 0 208 885 B1

8. Dispositif selon la revendication 7, caractérisé en ce que les axes des arbres (22, 55) se coupent sur la ligne médiane d'un tube laser (51).

9. Dispositif selon la revendication 7 ou 8, caractérisé en ce que les servo-moteurs à fraction de tour sont des mot-réducteurs.

10. Dispositif selon la revendication 9, caractérisé en ce que les mot-réducteurs sont des moteurs pas à pas.

11. Dispositif selon l'une des revendications 7 à 10, caractérisé en ce que les servo-moteurs à fraction de tour sont munis de convertisseurs numériques-analogiques et de régulateurs de positionnement.

## Claims

1. A method for displaying reference points (21, 22) in space, preferably reference points of a desired excavation profile at the head face (4) of a tunnel to be excavated in a given desired or drift direction, with the aid of a laser (51) set up on a point (11, 31) with known coordinates, the laser beam being deflected in controlled fashion in such a way that the reference points (21, 22) are displayed on a surface (4) in space, characterized in that the laser (51) is first directed to a junction point (1) whose coordinates are known, this direction is defined as the reference direction, the coordinates of the reference points (21, 22) are calculated, starting from this reference direction, in accordance with their distance from the laser (51) and the predetermined desired direction (2), and the laser (51) is directly swiveled in terms of the calculated coordinates to display the reference points (21, 22).

2. The method of claim 1, characterized in that a second laser set up in a different place (32) with known coordinates is also directed to the junction point (30), the coordinates of the reference points (33) are also calculated in accordance with their distance from the laser and a predetermined desired direction (tunnel axis 2), the second laser is directly swiveled in terms of the calculated coordinates, and the beams of both lasers are made to intersect at the reference points (33).

3. The method of claim 1 or 2, characterized in that the position of the laser (11, 31, 32) is calculated by aiming at three junction points whose positions are known.

4. The method of any of the above claims, characterized in that each laser (51, 31, 32) is swiveled about two axes perpendicular to each other.

5. The method of any of the above claims, characterized in that the laser (51, 31, 32) is swiveled cyclically to display a profile composed of a plurality of reference points (21, 22).

6. The method of any of the above claims, characterized in that the distance of the laser (51, 31, 32) from the reference point (21, 22, 33) produced by the laser beam is measured and the swivel angle of the laser beam corrected in accordance with the measured deviation from the desired position of the laser beam in such a way that the reference point lies on a desired profile.

7. An apparatus for carrying out the method of any of the above claims, characterized in that the laser (51) is connected at right angles with a first shaft (52) pivoted in a housing (53) provided with a pivot drive therefor, the housing (53) is connected with a second shaft (55) extending at right angles to the first shaft (52) and pivoted in a frame (56, 57) provided with a pivot drive therefor, and a computer having a control means for the pivot drives is provided for calculating the cordinates of the reference points (21, 22, 33) and controlling the pivot drives in terms of these data.

8. The apparatus of claim 7, characterized in that the axes of the shafts (22, 55) intersect on the center line of a laser pipe (51).

9. The apparatus of claim 7 or 8, characterized in that the pivot drives are gear motors.

10. The apparatus of claim 9, characterized in that the gear motors are step motors.

11. The apparatus of any of clams 7 to 10, characterized in that the pivot drives are provided with digital-to-analog converters and positioning controls.

Fig. 1

Fig. 2

Fig. 3

Fig. 4

Fig. 5

Fig..6

Fig. 7